(19) **Europäisches Patentamt**
**European Patent Office**
**Office européen des brevets**

(11) **EP 3 486 641 B1**

(12) **EUROPEAN PATENT SPECIFICATION**

(45) Date of publication and mention
of the grant of the patent:
**07.04.2021 Bulletin 2021/14**

(51) Int Cl.:
**G01N 23/2273** *(2018.01)*

(21) Application number: **18205263.9**

(22) Date of filing: **08.11.2018**

(54) **DATA PROCESSING APPARATUS AND DATA PROCESSING METHOD**

DATENVERARBEITUNGSVORRICHTUNG UND DATENVERARBEITUNGSVERFAHREN

APPAREIL ET PROCÉDÉ DE TRAITEMENT DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.11.2017 JP 2017216301**

(43) Date of publication of application:
**22.05.2019 Bulletin 2019/21**

(73) Proprietor: **JEOL Ltd.
Akishima
Tokyo 196-8558 (JP)**

(72) Inventors:
• **NAKAGAWA, Yasuhide**
  **Akishima, Tokyo 196-8558 (JP)**
• **SHIMA, Masahide**
  **Akishima, Tokyo 196-8558 (JP)**
• **YONEI, Kazunori**
  **Akishima, Tokyo 196-8558 (JP)**

(74) Representative: **Boult Wade Tennant LLP
Salisbury Square House
8 Salisbury Square
London EC4Y 8AP (GB)**

(56) References cited:
**WO-A1-2014/094039    US-A1- 2005 285 023**

• **Casaxps: "Peak Fitting in XPS", , 2006,
XP055057016, Retrieved from the Internet:
URL:http://www.casaxps.com/help_manual/man
ual_updates/peak_fitting_in_xps.pdf [retrieved
on 2013-03-19]**
• **A. HERRERA-GOMEZ ET AL: "Practical methods
for background subtraction in photoemission
spectra : Practical methods for background
subtraction in photoemission spectra",
SURFACE AND INTERFACE ANALYSIS., vol. 46,
no. 10-11, October 2014 (2014-10) , pages
897-905, XP055577815, GB ISSN: 0142-2421, DOI:
10.1002/sia.5453**
• **MIHIR UPADHYAYA ET AL: "X-ray photoelectron
spectroscopy process optimization for
characterization of trace contamination elements
for extreme ultraviolet resist outgassing study :
XPS optimization for EUV resist outgassing
study", X-RAY SPECTROMETRY, vol. 43, no. 2,
March 2014 (2014-03), pages 102-107,
XP055577835, GB ISSN: 0049-8246, DOI:
10.1002/xrs.2522**
• **ZHI-MIN ZHANG ET AL: "An intelligent
background-correction algorithm for highly
fluorescent samples in Raman spectroscopy",
JOURNAL OF RAMAN SPECTROSCOPY, vol. 41,
no. 6, 9 October 2009 (2009-10-09), pages 659-669,
XP055093969, ISSN: 0377-0486, DOI:
10.1002/jrs.2500**

EP 3 486 641 B1

**Description**

BACKGROUND OF THE INVENTION

The present invention relates to a data processor and a data processing method for removing the background of a spectrum measured by a spectrometer.

The Shirley method is often used as a background removal method for photoelectron peaks measured by an X-ray photoelectron spectroscope (XPS) (e.g. JP-A-H08-110313). The Shirley method is a method for determining the profile of the background based on the assumption that the inelastic background, when an electron loses energy from high energy to low energy, is constant regardless the level of the lost energy. In the Shirley method, the background g(E) at a certain energy E is given by the following expression.

$$g(E) = \int_E^\infty J(E')K(E'-E)dE' \approx const \times Q(E)$$

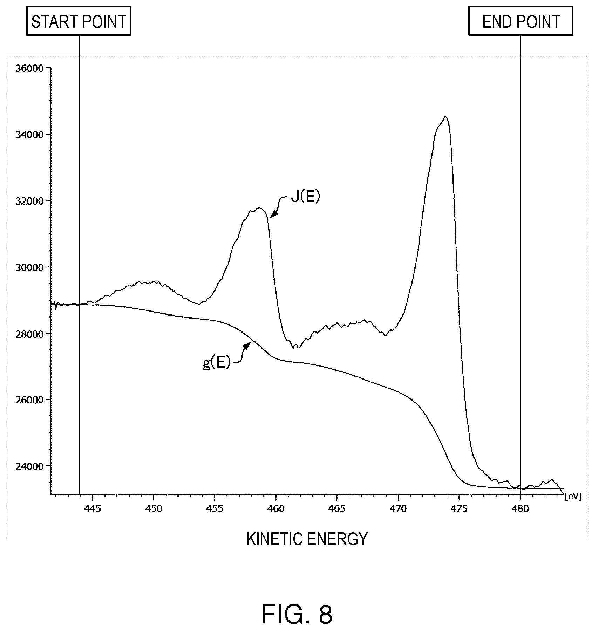

Here J(E) denotes a spectrum, K(E) denote an inelastic scattering differential cross-section, and Q(E) denotes an integrated intensity of the spectrum. In this way, the background g(E) indicates a form that is in proportion to the integrated intensity of the spectrum J(E) (see FIG. 8). According to the Shirley method, a value at the end point of a boundary of the background removal range (energy range to which the background removal is applied) under kinetic energy, is theoretically a value that is smaller than the value at the start point.

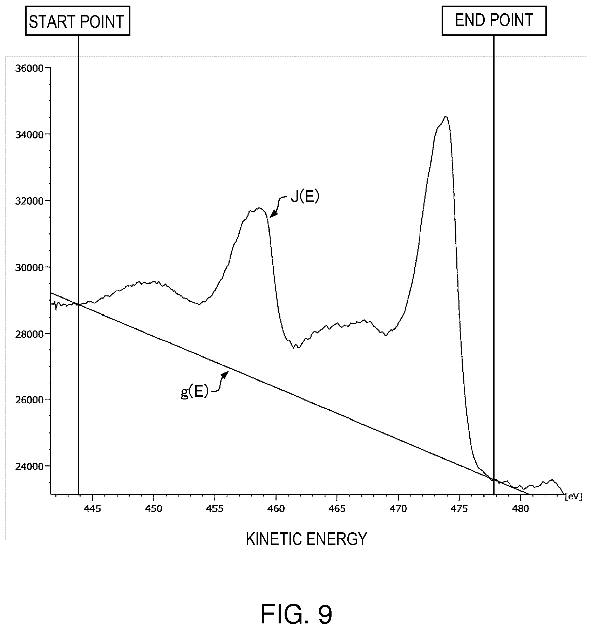

A simple known background removal method is a linear method. The linear method is a method of determining a start point and an end point of the boundary of the background removal range, connecting these points by a line, and removing the range that is less than this line as the background (see FIG. 9).

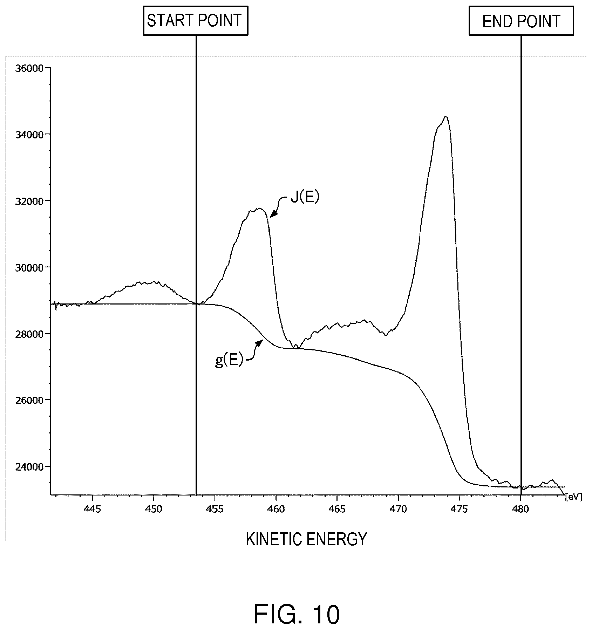

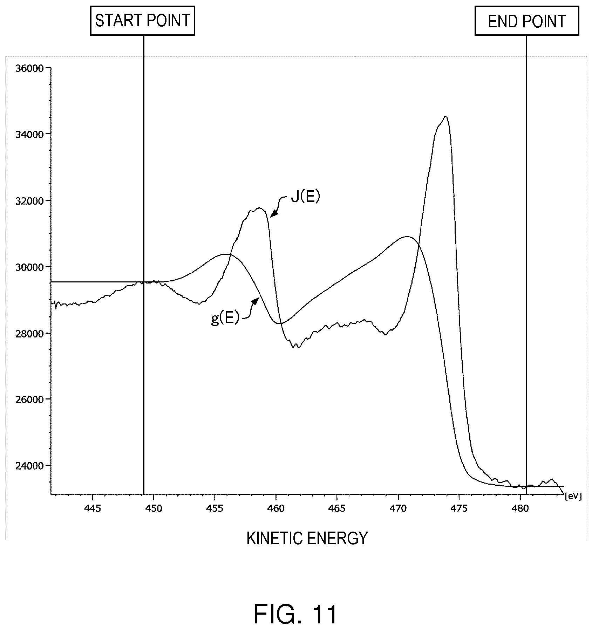

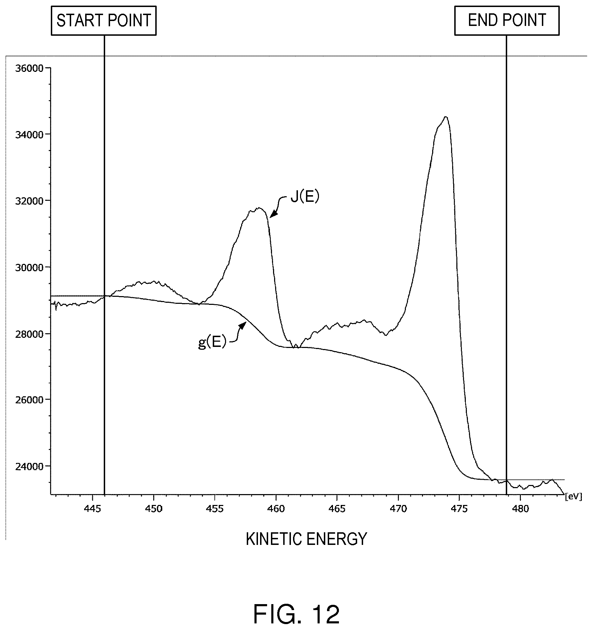

A problem of the Shirley method and the linear method is that there is no systematic way to determine the boundary of the background removal range, and the user (analyst) determines and sets the boundary at a most likely position, which can generate errors depending on the user. For example, in the case of the examples in FIG. 10 to FIG. 12, the background g(E) is determined by the Shirley method respectively, but the profile of the background g(E) is different in each example, depending on the position where the boundary (start point, end point) is set. Particularly in the case of the example in FIG. 11, the start point of the boundary is not set at an appropriate position, therefore in some regions the background g(E) exceeds the spectrum J(E). In each of these regions, the value after removing the background becomes negative, indicating that this spectrum theoretically does not exist.

CasaXPS, "Peak Fitting in XPS", (2006), URL:http://www.casaxps.com/help_manual/manual_updates/peak_fitting_in_xps.pdf, discloses a peak fitting method for XPS including acquiring a spectrum and calculating a background based on five cubic polynomial splines between two end points.

WO2014094039 (A1) discloses a background correction method for a spectrum of a target sample, the method including the steps of: (a) inputting the spectrum including a plurality of signal peaks attributable to spectral data, background and noise data; (b) estimating a signal-to-noise ratio (SNR) for the spectrum; (c) determining a position of each of the plurality of signal peaks by approximating a derivative of the spectrum using a wavelet transform (WT); (d) removing the plurality of signal peaks to identify the background; (e) subtracting the background from the spectrum to obtain a background corrected spectrum; and (f) outputting the background corrected spectrum as a target sample signal.

SUMMARY

The invention provides a data processor and a data processing method that enable automatically determining an energy range in which the background is removed without depending on the determination of the user.

According to a first aspect of the invention, there is provided a data processor including:

an acquiring unit that acquires a spectrum measured by a spectrometer; and
a data processing unit that sets an energy range in which a background of the spectrum is removed, and removes the background of the spectrum based on the set energy range,
the data processing unit temporarily setting one end point of the energy range at a maximum point of the spectrum, temporarily setting another end point of the energy range at a maximum energy point or a minimum energy point of the spectrum, determining a peak area of the energy range after removing the background while moving the one end point in a direction away from the other end point, and determining that a point at which the peak area is at the maximum is the one end point, and
the data processing unit temporarily setting the other end point at the maximum point of the spectrum, determining a peak area of the energy range after removing the background while moving the other end point in a direction away from the one end point, and determining that a point at which the peak area is at the maximum is the other end point, wherein the background is determined based on the end points of the energy range, and

the peak area of the energy range after removing the background is an area resulting from subtracting the background between the end points from the spectrum between the end points.

According to a second aspect of the invention, there is provided a data processing method including:

an acquiring step of acquiring a spectrum measured by a spectrometer; and

a data processing step of setting an energy range in which a background of the spectrum is removed, and removing the background of the spectrum based on the set energy range,

the data processing step including: temporarily setting one end point of the energy range at a maximum point of the spectrum, temporarily setting another end point of the energy range at a maximum energy point or a minimum energy point of the spectrum, determining a peak area of the energy range after removing the background while moving the one end point in a direction away from the other end point, and determining that a point at which the peak area is at the maximum is the one end point, and

the data processing step including: temporarily setting the other end point at the maximum point of the spectrum, determining a peak area of the energy range after removing the background while moving the other end point in a direction away from the one end point, and determining that a point at which the peak area is at the maximum is the other end point,

wherein the background is determined based on the end points of the energy range, and

the peak area of the energy range after removing the background is an area resulting from subtracting the background between the end points from the spectrum between the end points.

BRIEF DESCRIPTION OF THE SEVERAL VIEWS OF THE DRAWING

FIG. 1 is an example of a functional block diagram illustrating a data processor according to an embodiment of the invention.

FIG. 2 is a flow chart illustrating a processing flow of the first method.

FIG. 3 is a diagram for describing the first method.

FIG. 4 is a diagram for describing the first method.

FIG. 5 is a flow chart illustrating a processing flow of the second method.

FIG. 6 is a diagram for describing the second method.

FIG. 7 is a diagram for describing the second method.

FIG. 8 is a diagram for describing the Shirley method.

FIG. 9 is a diagram for describing the linear method.

FIG. 10 is a diagram illustrating the difference of backgrounds depending on the setting position of the boundary of the background removal range.

FIG. 11 is a diagram illustrating the difference of backgrounds depending on the setting position of the boundary of the background removal range.

FIG. 12 is a diagram illustrating the difference of backgrounds depending on the setting position of the boundary of the background removal range.

DETAILED DESCRIPTION OF THE EMBODIMENT

(1) According to one embodiment of the invention, there is provided a data processor including:

an acquiring unit that acquires a spectrum measured by a spectrometer; and

a data processing unit that sets an energy range in which a background of the spectrum is removed, and removes the background of the spectrum based on the set energy range,

the data processing unit temporarily setting one end point of the energy range at a maximum point of the spectrum, temporarily setting the other end point of the energy range at a maximum energy point or a minimum energy point of the spectrum, determining a peak area of the energy range after removing the background while moving the one end point in a direction away from the other end point, and determining that a point at which the peak area is at the maximum is the one end point, and
the data processing unit temporarily setting the other end point at the maximum point of the spectrum, determining a peak area of the energy range after removing the background while moving the other end point in a direction away from the one end point, and determining that a point at which the peak area is at the maximum is the other end point.

According to one embodiment of the invention, there is provided a data processing method including:

an acquiring step of acquiring a spectrum measured by a spectrometer; and
a data processing step of setting an energy range in which a background of the spectrum is removed, and removing the background of the spectrum based on the set energy range,
the data processing step including: temporarily setting one end point of the energy range at a maximum point of the spectrum, temporarily setting the other end point of the energy range at a maximum energy point or a minimum energy point of the spectrum, determining a peak area of the energy range after removing the background while moving the one end point in a direction away from the other end point, and determining that a point at which the peak area is at the maximum is the one end point, and
the data processing step including: temporarily setting the other end point at the maximum point of the spectrum, determining a peak area of the energy range after removing the background while moving the other end point in a direction away from the one end point, and determining that a point at which the peak area is at the maximum is the other end point.

According to the above embodiments, the point at which the peak area after removing the background is at the maximum is set as a boundary (end point) of the energy range in which the background is removed, therefore the energy range in which the background is removed can be mathematically set automatically without depending on the determination of the user.

(2) In the above data processor (or in the above data processing method),
the data processing unit (or the data processing step) may determine a peak area of the energy range after removing the background, and a peak area of a region in which a value becomes negative by removing the background, while moving the one end point in a direction away from the other end point, may determine, when there are a plurality of points at which the peak area of the region in which the value becomes negative is at the maximum, that a point at which the peak area of the energy range after removing the background is at the maximum is the one end point, and may determine, when there is only one point at which the peak area of the region in which the value becomes negative is at the maximum, that the one point at which the peak area of the region in which the value becomes negative is at the maximum is the one end point, and
the data processing unit (or the data processing step) may determine a peak area of the energy range after removing the background, and a peak area of a region in which a value becomes negative by removing the background, while moving the other end point in a direction away from the one end point, may determine, when there are a plurality of points at which the peak area of the region in which the value becomes negative is at the maximum, that a point at which the peak area of the energy range after removing the background is at the maximum is the other end point, and may determine, when there is only one point at which the peak area of the region in which the value becomes negative is at the maximum, that the one point at which the peak area of the region in which the value becomes negative is at the maximum is the other end point.

According to the above embodiments, when there are a plurality of points at which the peak area of the region in which the value becomes negative by removing the background, the point at which the peak area after removing the background is at the maximum is set as a boundary of the energy range in which the background is removed, and when there is only one point at which the peak area of the region in which the value becomes negative by removing the background is at the maximum, the point at which the peak area of the region in which the value becomes negative is at the maximum is set as the boundary of the energy range in which background is removed, whereby the energy range in which the background is removed can be more appropriately determined.

(3) In the above data processor (or in the above data processing method), the data processing unit (or the data processing step) may set the energy range after performing a process to smooth the spectrum.

According to the above embodiments, the influence of spike noise can be eliminated and an energy range in which the background is removed can be determined more appropriately.

(4) In the above data processor (or in the above data processing method), the data processing unit (or the data processing step) may detect a maximum point of the spectrum in a range excluding a maximum energy point and a minimum energy point of the spectrum.

According to the above embodiments, the influence of a sudden rise in the spectrum at both ends can be eliminated, and the energy range in which the background is removed can be more appropriately determined.

The preferred embodiments of the invention are described in detail below with reference to the drawings. Note that the following embodiments do not unduly limit the scope of the invention as stated in the claims. In addition, all of the elements described in connection with the following embodiments should not necessarily be taken as essential requirements of the invention.

1. Configuration

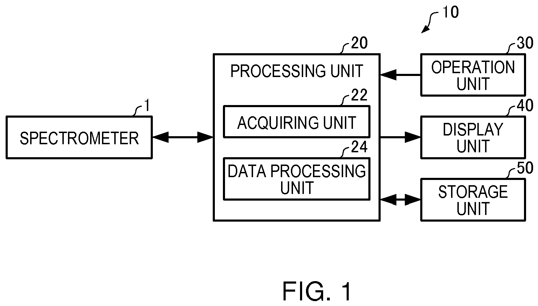

FIG. 1 is an example of a function block diagram of the data processor according to an embodiment of the invention. The data processor of the embodiment of the invention may have a configuration that omits a part of the composing elements (each portion) in FIG. 1.

The data processor 10 is an apparatus that removes a background of a spectrum measured by a spectrometer 1 which performs spectroscopic analysis of specimens. According to this embodiment of the invention, a case where the spectrometer 1 is an X-ray photoelectron spectroscope (XPS, ESCA) will be described as an example, but the spectrometer 1 may be an Auger electron spectrometer (AES), an energy-dispersive X-ray spectrometer (EDS, EDX), a nuclear magnetic resonance device (NMR), an electron spin resonance device (ESR), or an electron energy-loss spectrometer (EELS).

The data processor 10 includes a processing unit 20, an operation unit 30, a display unit 40 and a storage unit 50.

The operation unit 30 is for a user to input operation information, and output the inputted operation information to the processing unit 20. The functions of the operation unit 30 can be implemented by hardware such as a keyboard, a mouse, a button, a touch panel and a touch pad.

The display unit 40 displays an image generated by the processing unit 20, and the functions of the display unit 40 can be implemented by an LCD, a CRT, and a touch panel that also functions as the operation unit 30, for example.

The storage unit 50 stores programs and various data that cause the computer to function as a portion of the processing unit 20, and also functions as a work space of the processing unit 20. The functions of the storage unit 50 can be implemented by a hard disk, a RAM and the like.

The processing unit 20 (computer) performs a process of acquiring a spectrum and removing the background, and a processing of causing the display unit 40 to display the data processing result, for example. The functions of the processing unit 20 can be implemented by hardware such as various processors (e.g., CPU, DSP), and programs. The processing unit 20 includes an acquiring unit 22 and a data processing unit 24.

The acquiring unit 22 acquires a spectrum measured by the spectrometer 1, and stores the acquired spectrum in the storage unit 50.

The data processing unit 24 sets a boundary of an energy range in which the background of the spectrum is removed (background removal range), and performs a process to remove the background of the spectrum by the Shirley method or the linear method based on the background removal range that is set.

The processing unit 20 may perform the spectroscopic analysis (e.g. qualitative analysis, quantitative analysis) and display the spectroscopic analysis result on the display unit 40 based on the spectrum after removing the background.

2. Method of Embodiment of Invention

A method of an embodiment of the invention will be described next with reference to the drawings. Here two types of the method, to set a boundary of the background removal range at a position to prevent the value after removing the background becoming negative, will be described.

2-1. First Method

According to a first method, a point at which a peak area after removing the background is at the maximum within a boundary is set as a boundary (start point, end point) of the background removal range.

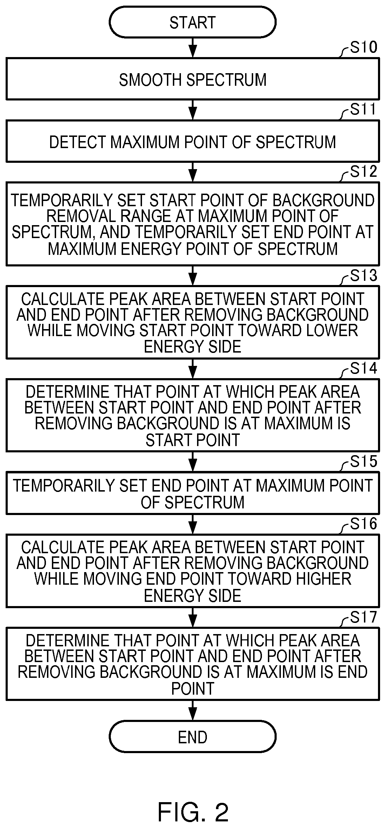

FIG. 2 is a flow chart illustrating a processing flow of the first method. First the data processing unit 24 performs a process to smooth the spectrum (step S10). For the method for smoothing the spectrum, the Savitzky-Golay method, for example, may be used. By smoothing the spectrum, the influence of spike noise can be eliminated.

Then the data processing unit 24 detects a maximum point (peak position indicating the maximum value) of the spectrum (step S11). By detecting the maximum point in a range excluding a maximum energy point and a minimum energy point of the spectrum (e.g. 20% to 80% range of the entire length of the spectrum), the influence caused by a sudden rise at both ends of the spectrum can be eliminated.

Then the data processing unit 24 temporarily sets a start point (one end point) of the background removal range at the maximum point of the spectrum, and temporarily sets an end point (the other end point) of the background removal range at a maximum energy point of the spectrum (step S12). Then the data processing unit 24 calculates a peak area between the start point and the end point (end point which was temporarily set in step S12) after removing the background, while moving the start point to the lower energy side (direction away from the other end point) (step S13), and determines that a point at which the calculated peak area is at the maximum is the start point (step S14). The peak area between the start point and the end point after removing the background refers to an area resulting from subtracting the background between the start point and the end point determined by the Shirley method or the linear method from the spectrum between the start point and the end point.

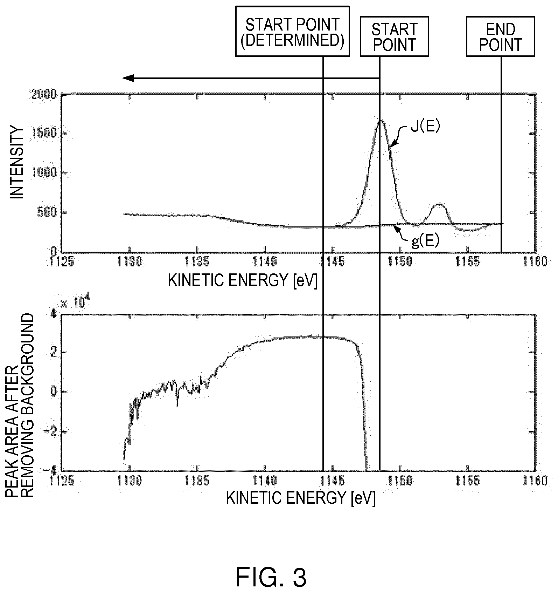

FIG. 3 illustrates a change in the peak area between the start point and the end point after removing the background (area resulting from subtracting the background between the start point and the end point determined by the Shirley method from the spectrum J(E) between the start point and the end point) when the start point, which is temporarily set at the maximum point of the spectrum, is changed to the minimum energy point. The point at which the peak area is at the maximum is determined as the start point. The background g(E) illustrated in FIG. 3 indicates a background determined between the determined start point and the temporarily set end point.

Then the data processing unit 24 temporarily sets the end point at the maximum point of the spectrum (step S15), and calculates the peak area between the start point (start point determined in step S14) and the end point after removing the background, while moving the end point to the higher energy side (direction away from the one end point) (step S16), and determines that a point at which the calculated peak area is at the maximum is the end point (step S17).

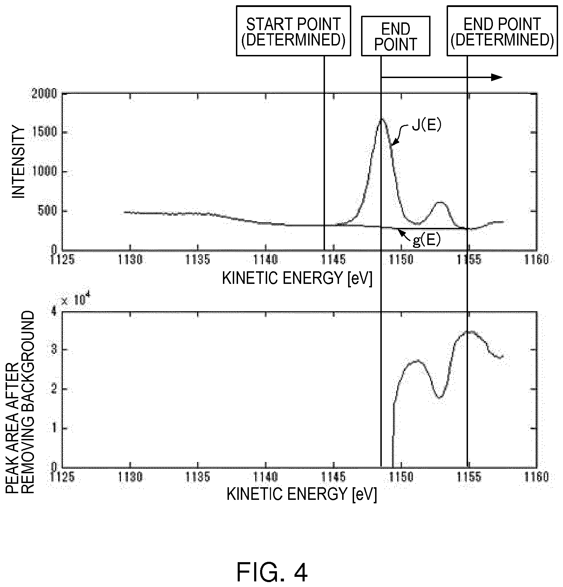

FIG. 4 illustrates a change of the peak area between the start point and the end point after removing the background (area resulting from subtracting the background between the start point and the end point determined by the Shirley method from the spectrum J(E) between the start point and the end point) when the end point, which is temporarily set at the maximum point of the spectrum, is changed to the maximum energy point. The point at which the peak area is at the maximum is determined as the end point. The background g(E) illustrated in FIG. 4 indicates a background determined between the determined start point and the determined end point.

Instead of determining the start point in step S13, the start point may be temporarily set at the maximum point of the spectrum again after determining the end point in step S17, so that the peak area between the start point and the end point (end point determined in step S17) after removing the background while moving this start point to the lower energy side and a point at which the calculated peak area is at the maximum, is determined as the start point.

Further, it is also possible that one end point of the background removal range is temporarily set at the maximum point of the spectrum, the other end point is set at the minimum energy point of the spectrum, the peak area between these end points after removing the background is calculated while moving the temporarily set one end point to the higher energy side, and the point at which the calculated peak area is at the maximum is determined as the one end point. Then a peak area between both end points after removing the background is calculated while moving the other end point, which is temporarily set at the maximum point of the spectrum, to the lower energy side, and a point at which the calculated peak area is at the maximum is determined as the other point.

In this way, according to the first method of the embodiment of the invention, a point at which the peak area between the start point and the end point (between the end points) after removing the background is at the maximum is determined as the boundary of the background removal range, whereby the background removal range can be mathematically determined automatically without depending on the determination of the user.

2-2. Second Method

According to a second method, a point at which a peak area of a region in which a value becomes negative by removing the background is at the maximum (a value closest to 0) is set as a boundary (start point, end point) of the background removal range. However, if there are a plurality of points at which the peak area of the region in which the value becomes negative, a point at which a peak area between the start point and the end point after removing the background is the maximum is set as the boundary of the background removal range, similarly to the first method.

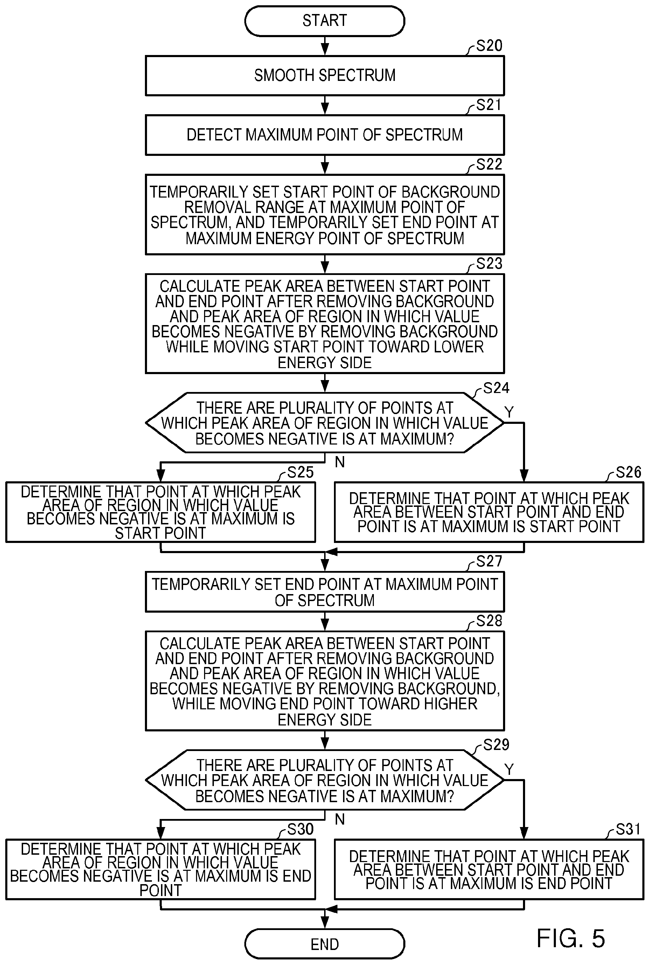

FIG. 5 is a flow chart illustrating a processing flow of the second method. Description of the steps S20 to S22, in which processes are similar to those in the steps S10 to S12 of the first method, will be omitted.

The data processing unit 24 calculates the peak area between the start point and the end point (end point which is temporarily set in step S22) after removing the background and the peak area of the region in which the value becomes negative by removing the background, while moving the start point which is temporarily set at the maximum point of the spectrum to the lower energy side (step S23). The peak area of the region in which the value becomes negative is a total of the areas of the regions of which background exceeds the spectrum after removing the background, and becomes 0 if there is no region of which background between the start point and the end point exceeds the spectrum. Then the data processing unit 24 decides whether there are a plurality of points at which the peak area of the region in which the value becomes negative is at the maximum (step S24). If there is only one point at which the peak area of the region in which the value becomes negative is at the maximum (N in step S24), the point at which the peak area of the region in which the value becomes negative is at the maximum is determined as the start point (step S25), and if there are a plurality of points at which the peak area of the region in which the value becomes negative is at the maximum (Y in step S24), the point at which the peak area between the start point and the end point after removing the background is at the maximum is determined as the start point (step S26).

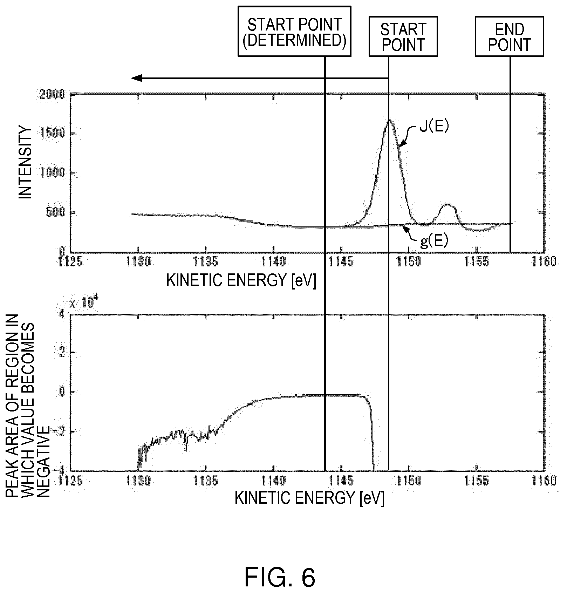

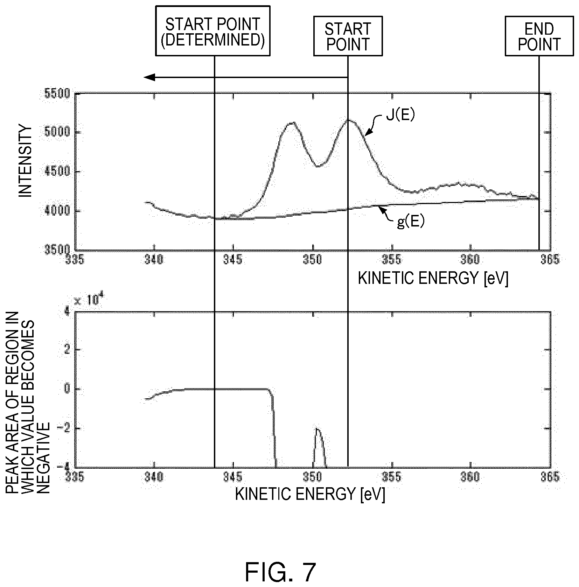

FIG. 6 and FIG. 7 illustrate a change in the peak area in which the value becomes negative by removing the background when the start point, which is temporarily set at the maximum point of the spectrum, is changed to the minimum energy point. In the example illustrated in FIG. 6, there is only one point at which the peak area of the region in which the value becomes negative is at the maximum (a value closest to 0), hence the point at which the peak area of the region in which the value becomes negative is determined as the start point. In the example illustrated in FIG. 7, on the other hand, there are a plurality of points at which the peak area of the region in which the value becomes negative is at the maximum (0 in this case), hence the point at which the peak area between the start point and the end point is at the maximum after removing the background is determined as the start point, similarly to the first embodiment. The background g(E) illustrated in FIG. 6 and FIG. 7 indicates the background determined between the determined start point and the temporarily set end point.

Then the data processing unit 24 temporarily sets the end point at the maximum point of the spectrum (step S27), and calculates the peak area between the start point (start point determined in steps S25 and S26) and the end point after removing the background, and the peak area of the region in which the value becomes negative by removing the background, while moving the end point to the higher energy side (step S28). Then the data processing unit 24 determines whether there are a plurality of points at which the peak area of the region in which the value becomes negative is at the maximum (step S29). If there is only one point at which the peak area of the region in which the value becomes negative (N in step S29), the point at which the peak area of the region in which the value becomes negative is at the maximum is determined as the end point (step S30), and if there are a plurality of points at which the peak area of the region in which the value becomes negative is at the maximum (Y in step S29), the point at which the peak area between the start point and the end point after removing the background is at the maximum is determined as the end point (step S31).

In this way, according to the second method of the embodiment of the invention, a point at which the peak area of the region in which the value becomes negative by removing the background is at the maximum is determined as the boundary of the background removal range, and if there are a plurality of points at which the peak area of the region in which the value becomes negative is at the maximum, the point at which the peak area between the start point and the end point after removing the background is at the maximum is determined as the boundary of the background removal range, similarly to the first method, whereby the background removal range can be more appropriately determined automatically.

Note that the invention is not limited to the embodiments thereof described above and thus it can be implemented in many various ways.

Some embodiments of the invention have been described in detail above, but a person skilled in the art will readily appreciate that various modifications can be made from the embodiments without departing from the scope of the invention.

**Claims**

1. A data processor (20) comprising:

   an acquiring unit (22) that acquires a spectrum measured by a spectrometer; and
   a data processing unit (24) that sets an energy range in which a background of the spectrum is removed, and removes the background of the spectrum based on the set energy range,
   the data processing unit (24) temporarily setting one end point of the energy range at a maximum point of the spectrum, temporarily setting another end point of the energy range at a maximum energy point or a minimum energy point of the spectrum, determining a peak area of the energy range after removing the background while moving the one end point in a direction away from the other end point, and determining that a point at which the peak area is at the maximum is the one end point, and
   the data processing unit (24) temporarily setting the other end point at the maximum point of the spectrum, determining a peak area of the energy range after removing the background while moving the other end point in a direction away from the one end point, and determining that a point at which the peak area is at the maximum is the other end point,
   wherein the background is determined based on the end points of the energy range, and
   the peak area of the energy range after removing the background is an area resulting from subtracting the background between the end points from the spectrum between the end points.

2. The data processor (20) according to claim 1, wherein
   the data processing unit (24) determines a peak area of the energy range after removing the background, and a peak area of a region in which a value becomes negative by removing the background, while moving the one end point in a direction away from the other end point, determines, when there are a plurality of points at which the peak area of the region in which the value becomes negative is at the maximum, that a point at which the peak area of the energy range after removing the background is at the maximum is the one end point, and determines, when there is only one point at which the peak area of the region in which the value becomes negative is at the maximum, that the one point at which the peak area of the region in which the value becomes negative is at the maximum is the one end point, and

the data processing unit (24) determines a peak area of the energy range after removing the background, and a peak area of a region in which a value becomes negative by removing the background, while moving the other end point in a direction away from the one end point, determines, when there are a plurality of points at which the peak area of the region in which the value becomes negative is at the maximum, that a point at which the peak area of the energy range after removing the background is at the maximum is the other end point, and determines, when there is only one point at which the peak area of the region in which the value becomes negative is at the maximum, that the one point at which the peak area of the region in which the value becomes negative is at the maximum is the other end point.

3. The data processor (20) according to claim 1 or 2, wherein the data processing unit (24) sets the energy range after performing a process to smooth the spectrum.

4. The data processor (20) according to any one of claims 1 to 3, wherein the data processing unit (24) detects a maximum point of the spectrum in a range excluding a maximum energy point and a minimum energy point of the spectrum.

5. A data processing method comprising:

an acquiring step of acquiring a spectrum measured by a spectrometer; and
a data processing step of setting an energy range in which a background of the spectrum is removed, and removing the background of the spectrum based on the set energy range,
the data processing step including: temporarily setting one end point of the energy range at a maximum point of the spectrum, temporarily setting another end point of the energy range at a maximum energy point or a minimum energy point of the spectrum, determining a peak area of the energy range after removing the background while moving the one end point in a direction away from the other end point, and determining that a point at which the peak area is at the maximum is the one end point, and
the data processing step including: temporarily setting the other end point at the maximum point of the spectrum, determining a peak area of the energy range after removing the background while moving the other end point in a direction away from the one end point, and determining that a point at which the peak area is at the maximum is the other end point,
wherein the background is determined based on the end points of the energy range, and
the peak area of the energy range after removing the background is an area resulting from subtracting the background between the end points from the spectrum between the end points.

## Patentansprüche

1. Datenprozessor (20), umfassend:

eine Erfassungseinheit (22), die ein von einem Spektrometer gemessenes Spektrum erfasst; und
eine Datenverarbeitungseinheit (24), die einen Energiebereich, in dem ein Hintergrund des Spektrums entfernt ist, einstellt und den Hintergrund des Spektrums basierend auf dem eingestellten Energiebereich entfernt,
wobei die Datenverarbeitungseinheit (24) temporär einen Endpunkt des Energiebereichs auf einen Maximalpunkt des Spektrums einstellt, temporär einen anderen Endpunkt des Energiebereichs auf einen maximalen Energiepunkt oder einen minimalen Energiepunkt des Spektrums einstellt, eine Peakfläche des Energiebereichs nach dem Entfernen des Hintergrunds bestimmt, während der eine Endpunkt in einer Richtung weg von dem anderen Endpunkt bewegt wird, und bestimmt, dass ein Punkt, an dem die Peakfläche maximal ist, der eine Endpunkt ist, und
die Datenverarbeitungseinheit (24) den anderen Endpunkt temporär auf den Maximalpunkt des Spektrums einstellt, eine Peakfläche des Energiebereichs nach Entfernen des Hintergrunds bestimmt, während der andere Endpunkt in eine Richtung weg von dem einen Endpunkt bewegt wird, und bestimmt, dass ein Punkt, an dem der Peakfläche das Maximum aufweist, der andere Endpunkt ist,

wobei der Hintergrund auf Basis der Endpunkte des Energiebereichs bestimmt wird, und

der Peakfläche des Energiebereichs nach Entfernen des Hintergrunds ein Bereich ist, der sich aus der Subtraktion des Hintergrunds zwischen den Endpunkten von dem Spektrum zwischen den Endpunkten ergibt.

2. Datenprozessor (20) nach Anspruch 1, wobei

die Datenverarbeitungseinheit (24) eine Peakfläche des Energiebereichs nach Entfernen des Hintergrunds und eine Peakfläche eines Bereichs, in dem ein Wert durch Entfernen des Hintergrunds negativ wird, bestimmt, während sie den einen Endpunkt in einer Richtung weg von dem anderen Endpunkt bewegt, bestimmt, wenn es eine Vielzahl von Punkten gibt, an denen die Peakfläche des Bereichs, in dem der Wert negativ wird, das Maximum ist, dass ein Punkt, an dem die Peakfläche des Energiebereichs nach Entfernen des Hintergrunds maximal ist, der eine Endpunkt ist, und bestimmt, wenn es nur einen Punkt gibt, an dem die Peakfläche des Bereichs, in dem der Wert negativ wird, maximal ist, dass der eine Punkt, an dem die Peakfläche des Bereichs, in dem der Wert negativ wird, maximal ist, der eine Endpunkt ist, und die Datenverarbeitungseinheit (24) eine Peakfläche des Energiebereichs nach Entfernen des Hintergrunds und eine Peakfläche eines Bereichs, in dem ein Wert negativ wird, durch Entfernen des Hintergrunds bestimmt, während der andere Endpunkt in einer Richtung weg von dem einen Endpunkt bewegt wird, bestimmt, wenn es eine Vielzahl von Punkten gibt, an denen die Peakfläche des Bereichs, in dem der Wert negativ wird, bei dem Maximum ist, dass ein Punkt, an dem die Peakfläche des Energiebereichs nach Entfernen des Hintergrunds das Maximum aufweist, der andere Endpunkt ist, und bestimmt, wenn es nur einen Punkt gibt, an dem die Peakfläche des Bereichs, in dem der Wert negativ wird, das Maximum aufweist, dass der eine Punkt, an dem die Peakfläche des Bereichs, in dem der Wert negativ wird, das Maximum aufweist, der andere Endpunkt ist.

3. Datenprozessor (20) nach Anspruch 1 oder 2, wobei die Datenverarbeitungseinheit (24) den Energiebereich nach Durchführung eines Verfahrens zur Glättung des Spektrums einstellt.

4. Datenprozessor (20) nach einem der Ansprüche 1 bis 3, wobei die Datenverarbeitungseinheit (24) einen Maximalpunkt des Spektrums in einem Bereich erfasst, der einen maximalen Energiepunkt und einen minimalen Energiepunkt des Spektrums ausschließt.

5. Datenverarbeitungsverfahren umfassend

einen Erfassungsschritt zum Erfassen eines von einem Spektrometer gemessenen Spektrums; und

einen Datenverarbeitungsschritt zum Einstellen eines Energiebereichs, in dem ein Hintergrund des Spektrums entfernt ist, und Entfernen des Hintergrunds des Spektrums basierend auf dem eingestellten Energiebereich,

der Datenverarbeitungsschritt einschließt: temporäres Einstellen eines Endpunkts des Energiebereichs auf einen Maximalpunkt des Spektrums, temporäres Einstellen eines anderen Endpunkts des Energiebereichs auf einen Maximalenergiepunkt oder einen Minimalenergiepunkt des Spektrums, Bestimmen einer Peakfläche des Energiebereichs nach Entfernen des Hintergrunds, während der eine Endpunkt in einer Richtung weg von dem anderen Endpunkt bewegt wird, und Bestimmen, dass ein Punkt, an dem die Peakfläche das Maximum aufweist, der eine Endpunkt ist, und

der Datenverarbeitungsschritt umfasst: temporäres Setzen des anderen Endpunkts auf den Maximalpunkt des Spektrums, Bestimmen einer Peakfläche des Energiebereichs nach Entfernen des Hintergrunds, während der andere Endpunkt in eine Richtung weg von dem einen Endpunkt bewegt wird, und Bestimmen, dass ein Punkt, an dem die Peakfläche das Maximum aufweist, der andere Endpunkt ist, wobei der Hintergrund auf Basis der Endpunkte des Energiebereichs bestimmt wird, und

die Peakfläche des Energiebereichs nach Entfernen des Hintergrunds eine Fläche ist, die sich aus der Subtraktion des Hintergrunds zwischen den Endpunkten von dem Spektrum zwischen den Endpunkten ergibt.

**Revendications**

1. Processeur de données (20) comprenant :

une unité d'acquisition (22) qui acquiert un spectre mesuré par un spectromètre ; et
une unité de traitement de données (24) qui établit une plage d'énergie dans laquelle un arrière-plan du spectre est supprimé, et supprime l'arrière-plan du spectre sur la base de la plage d'énergie définie,
l'unité de traitement de données (24) établissant temporairement un première point d'extrémité de la plage d'énergie à un point maximum du spectre, établissant temporairement un autre point d'extrémité de la plage d'énergie à un point d'énergie maximum ou un point d'énergie minimum du spectre, déterminant une zone de pic de la plage d'énergie après avoir supprimé l'arrière-plan tout en déplaçant le premier point d'extrémité dans une direction éloignée de l'autre point d'extrémité, et déterminant qu'un point au niveau duquel la zone de pic est au maximum est le premier point d'extrémité, et

l'unité de traitement de données (24) établissant temporairement l'autre point d'extrémité au niveau du point maximum du spectre, déterminant une zone de pic de la plage d'énergie après avoir supprimé l'arrière-plan tout en déplaçant l'autre point d'extrémité dans une direction éloignée du premier point d'extrémité, et déterminant qu'un point au niveau duquel la zone de pic est au maximum est l'autre point d'extrémité,

dans lequel l'arrière-plan est déterminé sur la base des points d'extrémité de la plage d'énergie, et

la zone de pic de la plage d'énergie après suppression de l'arrière-plan est une zone résultant de la soustraction de l'arrière-plan entre les points d'extrémité à partir du spectre entre les points d'extrémité.

2. Processeur de données (20) selon la revendication 1, dans lequel

l'unité de traitement de données (24) détermine une zone de pic de la plage d'énergie après suppression de l'arrière-plan, et une zone de pic d'une région dans laquelle une valeur devient négative après suppression de l'arrière-plan, tout en déplaçant le premier point d'extrémité dans une direction éloignée de l'autre point d'extrémité, détermine, lorsqu'il y a une pluralité de points au niveau desquels la zone de pic de la région dans laquelle la valeur devient négative est au maximum, qu'un point au niveau duquel la zone de pic de la plage d'énergie après suppression de l'arrière-plan est au maximum est le premier point d'extrémité, et détermine, lorsqu'il n'y a qu'un seul point au niveau duquel la zone de pic de la région dans laquelle la valeur devient négative est au maximum, que le seul point au niveau duquel la zone de pic de la région dans laquelle la valeur devient négative est au maximum est le premier point d'extrémité, et

l'unité de traitement de données (24) détermine une zone de pic de la plage d'énergie après suppression de l'arrière-plan, et une zone de pic d'une région dans laquelle une valeur devient négative après suppression de l'arrière-plan, tout en déplaçant l'autre point d'extrémité dans une direction éloignée du premier point d'extrémité, détermine, lorsqu'il y a une pluralité de points au niveau desquels la zone de pic de la région dans laquelle la valeur devient négative est au maximum, qu'un point au niveau duquel la zone de pic de la plage d'énergie après suppression de l'arrière-plan est au maximum est l'autre point d'extrémité, et détermine, lorsqu'il n'y a qu'un seul point au niveau duquel la zone de pic de la région dans laquelle la valeur devient négative est au maximum, que le point au niveau duquel la zone de pic de la région dans laquelle la valeur devient négative est au maximum est l'autre point d'extrémité.

3. Processeur de données (20) selon la revendication 1 ou 2, dans lequel l'unité de traitement de données (24) établit la plage d'énergie après avoir exécuté un processus pour lisser le spectre.

4. Processeur de données (20) selon l'une quelconque des revendications 1 à 3, dans lequel l'unité de traitement de données (24) détecte un point maximum du spectre dans une plage excluant un point d'énergie maximum et un point d'énergie minimum du spectre.

5. Procédé de traitement de données comprenant :

une étape d'acquisition consistant à acquérir un spectre mesuré par un spectromètre ; et
une étape de traitement de données consistant à établir une plage d'énergie dans laquelle un arrière-plan du spectre est supprimé, et à supprimer l'arrière-plan du spectre sur la base de la plage d'énergie établie,
l'étape de traitement de données comprenant les étapes consistant à : établir temporairement un premier point d'extrémité de la plage d'énergie au niveau d'un point maximum du spectre, établir temporairement un autre point d'extrémité de la plage d'énergie au niveau d'un point d'énergie maximum ou d'un point d'énergie minimum du spectre, déterminer une d'une zone de pic de la plage d'énergie après avoir supprimé l'arrière-plan tout en déplaçant le premier point d'extrémité dans une direction éloignée de l'autre point d'extrémité, et déterminer qu'un point au niveau duquel la zone de pic est au maximum est le premier point d'extrémité, et
l'étape de traitement de données comprenant les étapes consistant à : établir temporairement l'autre point d'extrémité au niveau du point maximum du spectre, établir une zone de pic de la plage d'énergie après suppression de l'arrière-plan tout en déplaçant l'autre point d'extrémité dans une direction éloignée du premier point d'extrémité, et déterminer qu'un point au niveau duquel la zone pic est au maximum est l'autre point d'extrémité,
dans lequel l'arrière-plan est déterminé sur la base des points d'extrémité de la plage d'énergie, et
la zone de pic de la plage d'énergie après suppression de l'arrière-plan est une zone résultant de la soustraction de l'arrière-plan entre les points d'extrémité à partir du spectre entre les points d'extrémité.

FIG. 1

```
                    ┌──────────────────┐
                    │      START       │
                    └──────────────────┘
                              │          ┌S10
                              ▼
        ┌─────────────────────────────────────────────┐
        │             SMOOTH SPECTRUM                  │
        └─────────────────────────────────────────────┘
                              │          ┌S11
                              ▼
        ┌─────────────────────────────────────────────┐
        │        DETECT MAXIMUM POINT OF SPECTRUM      │
        └─────────────────────────────────────────────┘
                              │          ┌S12
                              ▼
        ┌─────────────────────────────────────────────┐
        │  TEMPORARILY SET START POINT OF BACKGROUND   │
        │     REMOVAL RANGE AT MAXIMUM POINT OF        │
        │ SPECTRUM, AND TEMPORARILY SET END POINT AT   │
        │    MAXIMUM ENERGY POINT OF SPECTRUM          │
        └─────────────────────────────────────────────┘
                              │          ┌S13
                              ▼
        ┌─────────────────────────────────────────────┐
        │   CALCULATE PEAK AREA BETWEEN START POINT    │
        │ AND END POINT AFTER REMOVING BACKGROUND      │
        │  WHILE MOVING START POINT TOWARD LOWER       │
        │              ENERGY SIDE                     │
        └─────────────────────────────────────────────┘
                              │          ┌S14
                              ▼
        ┌─────────────────────────────────────────────┐
        │   DETERMINE THAT POINT AT WHICH PEAK AREA    │
        │ BETWEEN START POINT AND END POINT AFTER      │
        │  REMOVING BACKGROUND IS AT MAXIMUM IS        │
        │              START POINT                     │
        └─────────────────────────────────────────────┘
                              │          ┌S15
                              ▼
        ┌─────────────────────────────────────────────┐
        │  TEMPORARILY SET END POINT AT MAXIMUM POINT  │
        │              OF SPECTRUM                     │
        └─────────────────────────────────────────────┘
                              │          ┌S16
                              ▼
        ┌─────────────────────────────────────────────┐
        │   CALCULATE PEAK AREA BETWEEN START POINT    │
        │ AND END POINT AFTER REMOVING BACKGROUND      │
        │  WHILE MOVING END POINT TOWARD HIGHER        │
        │              ENERGY SIDE                     │
        └─────────────────────────────────────────────┘
                              │          ┌S17
                              ▼
        ┌─────────────────────────────────────────────┐
        │   DETERMINE THAT POINT AT WHICH PEAK AREA    │
        │ BETWEEN START POINT AND END POINT AFTER      │
        │  REMOVING BACKGROUND IS AT MAXIMUM IS END    │
        │                 POINT                        │
        └─────────────────────────────────────────────┘
                              │
                              ▼
                    ┌──────────────────┐
                    │       END        │
                    └──────────────────┘
```

FIG. 2

FIG. 3

FIG. 4

START

S20
SMOOTH SPECTRUM

S21
DETECT MAXIMUM POINT OF SPECTRUM

S22
TEMPORARILY SET START POINT OF BACKGROUND REMOVAL RANGE AT MAXIMUM POINT OF SPECTRUM, AND TEMPORARILY SET END POINT AT MAXIMUM ENERGY POINT OF SPECTRUM

S23
CALCULATE PEAK AREA BETWEEN START POINT AND END POINT AFTER REMOVING BACKGROUND AND PEAK AREA OF REGION IN WHICH VALUE BECOMES NEGATIVE BY REMOVING BACKGROUND WHILE MOVING START POINT TOWARD LOWER ENERGY SIDE

S24
THERE ARE PLURALITY OF POINTS AT WHICH PEAK AREA OF REGION IN WHICH VALUE BECOMES NEGATIVE IS AT MAXIMUM?
Y
N

S25
DETERMINE THAT POINT AT WHICH PEAK AREA OF REGION IN WHICH VALUE BECOMES NEGATIVE IS AT MAXIMUM IS START POINT

S26
DETERMINE THAT POINT AT WHICH PEAK AREA BETWEEN START POINT AND END POINT IS AT MAXIMUM IS START POINT

S27
TEMPORARILY SET END POINT AT MAXIMUM POINT OF SPECTRUM

S28
CALCULATE PEAK AREA BETWEEN START POINT AND END POINT AFTER REMOVING BACKGROUND AND PEAK AREA OF REGION IN WHICH VALUE BECOMES NEGATIVE BY REMOVING BACKGROUND, WHILE MOVING END POINT TOWARD HIGHER ENERGY SIDE

S29
THERE ARE PLURALITY OF POINTS AT WHICH PEAK AREA OF REGION IN WHICH VALUE BECOMES NEGATIVE IS AT MAXIMUM?
Y
N

S30
DETERMINE THAT POINT AT WHICH PEAK AREA OF REGION IN WHICH VALUE BECOMES NEGATIVE IS AT MAXIMUM IS END POINT

S31
DETERMINE THAT POINT AT WHICH PEAK AREA BETWEEN START POINT AND END POINT IS AT MAXIMUM IS END POINT

END

FIG. 5

FIG. 6

FIG. 7

FIG. 8

FIG. 9

FIG. 10

FIG. 11

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08110313 A

- WO 2014094039 A1

**Non-patent literature cited in the description**

- **CASAXPS.** *Peak Fitting in XPS,* 2006, http://www.casaxps.com/help_manual/manual_updates/peak_fitting_in_xps.pdf